# EUROPÄISCHE PATENTSCHRIFT

(11) **EP 0 670 438 B1**
(45) Veröffentlichungstag und Bekanntmachung des Hinweises auf die Patenterteilung: **08.04.1998**
(21) Anmeldenummer: 95101116.2
(22) Anmeldetag: 27.01.1995
(51) Int. Cl.: F16H 35/00

(54) **Schwenkeinrichtung**
Pivoting device
Dispositif de pivotement

(30) Priorität: 01.03.1994 DE 9403424 U
(43) Veröffentlichungstag der Anmeldung: 06.09.1995
(73) Patentinhaber: FESTO AG & Co, 73734 Esslingen (DE)
(72) Erfinder: Stoll, Kurt, Dr., D-73732 Esslingen (DE); Wagner, Albrecht, D-73650 Winterbach (DE)
(74) Vertreter: Abel, Martin, Dipl.-Ing.

(56) Entgegenhaltungen:
- EP-A- 0 551 122
- GB-A- 2 239 053
- PATENT ABSTRACTS OF JAPAN vol. 12 no. 400 (M-756) ,24.Oktober 1988 & JP-A-63 144926 (HONDA) 17.Juni 1988,

## Beschreibung

Die Erfindung betrifft eine Schwenkeinrichtung mit einer bezüglich eines Trägers drehbeweglichen und mittels eines Drehantriebes zu einer Drehbewegung antreibbaren Antriebswelle, mit einem in Querrichtung von der Antriebswelle abstehenden, zu einer Schwenkbewegung bezüglich des Trägers antreibbaren Schwenkarm, an dem im Abstand zur Antriebswelle eine parallelachsig zu dieser angeordnete Abtriebswelle drehbeweglich gelagert ist, die mit einem zu verschwenkenden Gegenstand verbindbar ist, und mit einer sich längs des Schwenkarmes erstreckenden und an dem Schwenkarm drehbar gelagerten Zwischenwelle, die einerseits mit einem dem Träger zugeordneten Zahnkranz und andererseits mit einem abtriebswellenfesten Zahnkranz in Verzahnungseingriff steht, wobei die Abtriebswelle beim angetriebenen Verschwenken des Schwenkarmes eine bezüglich dessen Schwenkrichtung gegensinnige Gegendrehbewegung ausführen kann.

Eine Schwenkeinrichtung dieser Art geht aus der JP-A-63/144 926 hervor. Sie ist dort Bestandteil eines Werkzeugwechslers und verfügt über einen ortsfesten Träger, an dem ein Schwenkarm schwenkbar gelagert ist, der mit Werkzeughaltern bestückt ist. Mittels einer von einem Arbeitszylinder gebildeten Antriebseinrichtung kann der Schwenkarm mit den daran angeordneten Werkzeughaltern zu einer Schwenkbewegung relativ zu dem Träger angetrieben werden. Darüberhinaus können die Werkzeughalter relativ zum Schwenkarm verdreht werden, indem sie an einer am Schwenkarm gelagerten Abtriebswelle sitzen, die mit einer Antriebswelle verbunden ist, an der ein Drehantrieb angreift. Wird der Schwenkarm verschwenkt, wobei gleichzeitig die Antriebswelle durch den stillstehenden Drehantrieb blockiert ist, führt die Abtriebswelle eine gegensinnige Drehbewegung aus. Auf diese Weise erfahren die Werkzeughalter während des Ablaufes der Schwenkbewegung des sie tragenden Schwenkarmes eine automatische Änderung ihrer Winkellage bezüglich des Schwenkarmes, ohne daß hierzu am Träger selbst eine Lageveränderung vorzunehmen wäre. Durch die Ausgestaltung der Verzahnungseingriffe läßt sich die jeweils gewünschte Drehwinkelveränderung der Abtriebswelle vorgeben.

Die bekannte Schwenkeinrichtung benötigt insgesamt zwei voneinander unabhängige Antriebe. Die seitliche Anordnung des mit dem Schwenkarm zusammenwirkenden Antriebes führt dabei zu einer nicht unbeträchtlichen Baubreite. Außerdem ist ein gewisser Lagerungsaufwand erforderlich, um den Schwenkarm bezüglich des Trägers drehbar zu lagern.

Es ist die Aufgabe der vorliegenden Erfindung, eine Schwenkeinrichtung zu schaffen, die mit geringem Aufwand eine exakte Positionierung eines entlang einer gekrümmten Bahn zu bewegenden Gegenstandes ermöglicht.

Diese Aufgabe wird dadurch gelöst, daß der Schwenkarm drehfest an der Antriebswelle angeordnet ist und über den auf die Antriebswelle einwirkenden Drehantrieb zu seiner Schwenkbewegung angetrieben wird, wobei der dem Träger zugeordnete Zahnkranz zur Erzeugung der Gegendrehbewegung der Abtriebswelle als bezüglich dem Träger unverdrehbar festgelegter Zahnkranz ausgeführt ist.

Auf diese Weise werden sämtliche zur Positionierung des an der Abtriebswelle angeordneten Gegenstandes benötigten Bewegungsabläufe von der mit dem Drehantrieb verbundenen Antriebswelle erzeugt. Durch die angetriebene Antriebswelle wird der Schwenkarm zu seiner Schwenkbewegung veranlaßt, wobei durch den Verzahnungseingriff mit dem trägerfesten Zahnkranz die Lagekorrektur des betreffenden Gegenstandes relativ zum Schwenkarm hervorgerufen wird. Da der Schwenkarm an der Antriebswelle angeordnet ist, kann auf eine zusätzliche Drehlagerung zwischen dem Schwenkarm und dem Träger verzichtet werden. Bei den vorhandenen Zahnkränzen kann es sich je nach Ausgestaltung um in sich geschlossene Vollkränze oder aber um Teilkränze handeln.

Vorteilhafte Weiterbildungen der Erfindung sind in den Unteransprüchen aufgeführt.

Eine vorteilhafte Ausgestaltung sieht vor, daß der Drehwinkel der Gegendrehbewegung der Abtriebswelle mit dem Schwenkwinkel der Schwenkbewegung des Schwenkarmes stets übereinstimmt, so daß die Drehwinkelposition des Gegenstandes bezogen auf ein raumfestes Koordinatensystem unverändert bleibt.

Es ist von besonderem Vorteil, wenn der Querabstand zwischen der Abtriebswelle und der Antriebswelle verstellbar ist, um für die beim Verschwenken des Schwenkarmes mitverschwenkte Abtriebswelle je nach Bedarf verschiedene Schwenkradien vorzugeben. Dabei ist gleichzeitig ein Längenausgleich im Bereich der Zwischenwelle vorgesehen, die hierzu nach Art einer Teleskopwelle ausgebildet ist und zwei in Axialrichtung relativ zueinander verschiebbare und zugleich in ständiger drehfester Verbindung miteinander stehende Wellenteile aufweist.

Bei dem mit der Abtriebswelle zu verbindenden Gegenständen kann es sich insbesondere um sogenannte Sauggreifer handeln, die über einen mit einer Unterdruckquelle verbindbaren Saugnapf verfügen und z. B. zum Transport von Werkstücken oder sonstigen Bauteilen in der Fertigungs- oder Montagetechnik eingesetzt werden.

Nachfolgend wird die Erfindung anhand der beiliegenden Zeichnung näher erläutert. In dieser zeigen:
- Fig. 1: eine erste Bauform der erfindungsgemäßen Schwenkeinrichtung, teilweise im Längsschnitt,
- Fig. 2: eine Untersicht auf die Schwenkeinrichtung aus Fig. 1 mit Blickrichtung gemäß Pfeil II, wobei der Schwenkarm eine Ausgangsstellung einnimmt,
- Fig. 3: die Schwenkeinrichtung aus Fig. 2 in einer entsprechenden Darstellungsweise, wobei der Schwenkarm in einer beispielhaften verschwenkten Stellung gezeigt ist,
- Fig. 4: eine Seitenansicht der Schwenkeinrichtung aus Fig. 1, wobei der Schwenkarm auf minimalen Schwenkradius rₘᵢₙ der Abtriebswelle eingestellt ist, und
- Fig. 5: die Schwenkeinrichtung aus Fig. 4 in einer entsprechenden Darstellungsweise bei eingestelltem maximalem Schwenkradius rₘₐₓ.

Die beispielsgemäße Schwenkeinrichtung 1 verfügt über einen Träger 2 beliebiger Gestalt, der eine Befestigung der Schwenkeinrichtung 1 an einer nicht näher dargestellten Haltestruktur ermöglicht. Eine solche Haltestruktur kann z. B. ein aus Profilelementen aufgebautes Gestell oder der Arm eines Handhabungsroboters sein. Beim Ausführungsbeispiel verfügt der Träger 2 am einen Endbereich über eine plattenartige Endpartie 3, die mit Durchgangslöchern 4 versehen ist, die die Durchführung von Befestigungsschrauben ermöglichen.

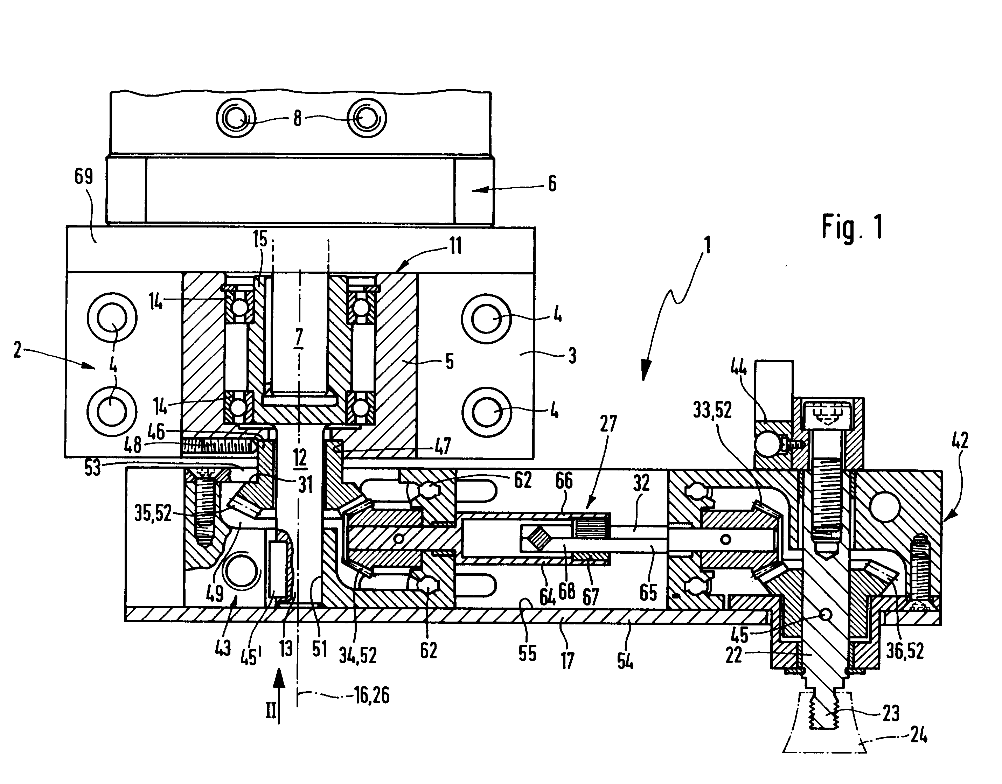

Ausgehend von der plattenartigen Endpartie 3 ragt eine etwas schmälere Tragpartie 5 auslegerartig weg. Sie trägt an ihrer in der in Fig. 1 gezeigten bevorzugten Gebrauchsposition nach oben weisenden Oberseite einen beim Ausführungsbeispiel fluidisch betätigbaren Drehantrieb 6, der nur ausschnittsweise gezeigt ist. Drehantriebe solcher Art sind bekannt und gehen beispielsweise aus der DE 39 41 255 A 1 hervor, auf die hiermit verwiesen wird. Es kann sich grundsätzlich um einen Drehantrieb 6 beliebiger Art handeln, und er verfügt über eine nach unten zum Träger 2 hin ragende Betätigungswelle 7, die in eine ununterbrochen umlaufende oder aber vorzugsweise in eine hin- und hergehende Drehbewegung um ihre Längsachse versetzbar ist. Beim Ausführungsbeispiel geschieht dies durch gesteuerte Zu- und Abfuhr von fluidischem Druckmittel, insbesondere Druckluft, in den Drehantrieb 6, der zu diesem Zweck über zwei Anschlußöffnungen 8 verfügt. Im Innern des Drehantriebes 6 kann ein flügelartiger Schwenkkolben vorhanden sein, der mit der Betätigungswelle 7 gekoppelt ist und deren Rotationsbewegung hervorruft.

An dem Träger 2 ist eine Antriebswelle 12 axial unverschieblich drehgelagert. Sie ragt mit einem endseitigen ersten Kupplungsabschnitt 13 an der dem oben liegenden Montageplatz 11 für den Drehantrieb 6 entgegengesetzten Unterseite des Trägers 2 über die Tragpartie 5 vor. Die Drehlagerung erfolgt zweckmäßigerweise im Innern der Tragpartie 5 mittels geeigneter Axial- und/oder Radiallager 14. Ihr nach oben weisender Endabschnitt bildet zweckmäßigerweise einen zweiten Kupplungsabschnitt 15, der sich mit der Betätigungswelle 7 eines an dem Montageplatz 1 festgelegten Drehantriebes 6 drehfest kuppeln läßt. Auf diese Weise führt die Antriebswelle 12 während des Betriebes eines angebauten Drehantriebes 6 eine Drehbewegung um ihre Längsachse 16 aus. Diese Drehbewegung kann eine hin- und hergehende Drehbewegung sein, deren Drehwinkel zweckmäßigerweise geringer ist als 360°. Bei entsprechender Ausgestaltung des Drehantriebes 6, beispielsweise als Elektromotor, wäre aber auch eine ständig gleichsinnige Rotationsbewegung möglich.

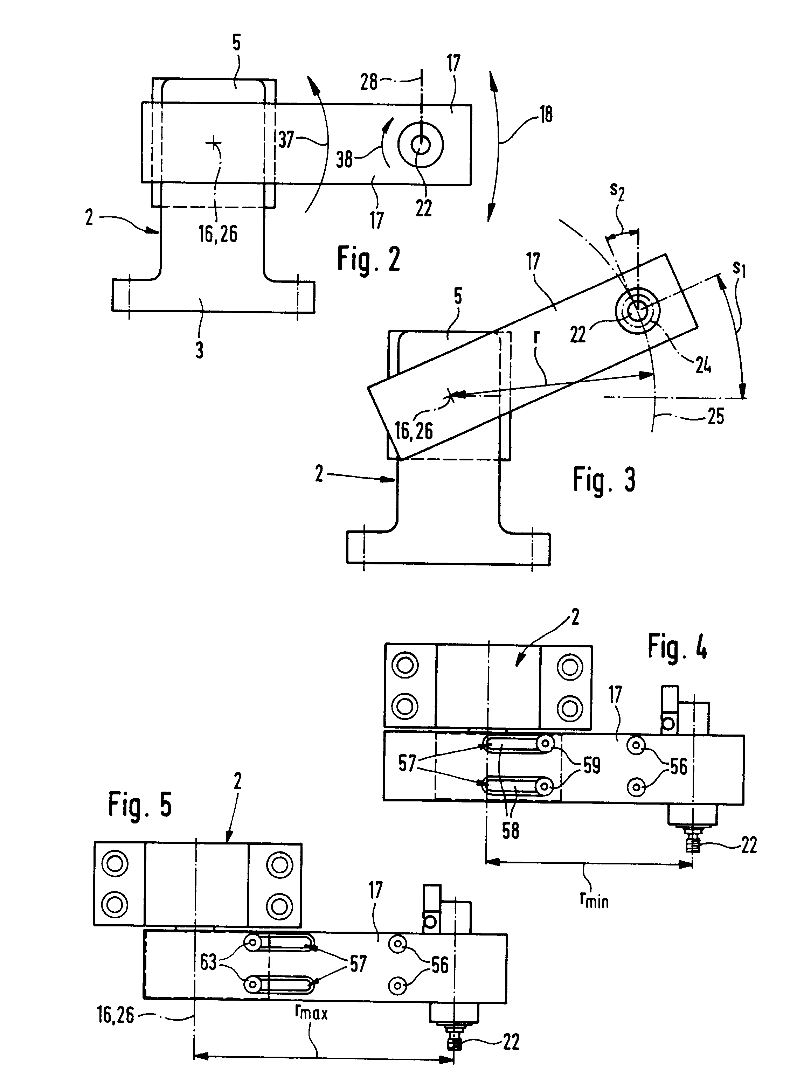

An dem ersten Kupplungsabschnitt 13 der Antriebswelle 12 ist ein sich quer zu ihrer Längsachse 16 erstreckender Schwenkarm 17 drehfest angeordnet. Bevorzugt erstreckt sich der Schwenkarm 17 im rechten Winkel zu besagter Längsachse 16. Bei einer Drehbewegung der Antriebswelle 12 wird der Schwenkarm 17 gleichsinnig mitbewegt und führt dadurch eine in Fig. 2 durch Doppelpfeil 18 verdeutlichte Schwenkbewegung bezüglich des Trägers 2 aus.

An dem Schwenkarm 17 ist mit Querabstand zur Antriebswelle 12 eine Abtriebswelle 22 drehbeweglich gelagert. Sie ist vorzugsweise parallel zur Antriebswelle 12 ausgerichtet. Eine an ihr vorgesehene Befestigungspartie 23 ermöglicht das insbesondere lösbare Festlegen eines beliebigen Gegenstandes, beispielsweise eines in Fig. 1 strichpunktiert angedeuteten Sauggreifers 24, der an eine Unterdruckquelle anschließbar ist und zum Transport von Werkstücken eingesetzt werden kann. Beim Verschwenken des Schwenkarmes 17 wird der Sauggreifer 24 bzw. sonstige Gegenstand entlang einer in Fig. 3 strichpunktiert angedeuteten gekrümmten Bahn 25 verlagert, bei der es sich regelmäßig um eine kreisbogenförmige Bahn handelt. Bezogen auf den Träger 2 führt somit der Sauggreifer 24 eine Schwenkbewegung durch, wobei der Schwenkradius r vom Abstand zwischen der Antriebswelle 12 und der Abtriebswelle 22 bestimmt bzw. beeinflußt wird.

Die Schwenkachse 26 des Schwenkarmes 17 fällt mit der Längsachse 16 der Antriebswelle 12 zusammen. Wäre die Abtriebswelle 22 starr am Schwenkarm 17 befestigt, würde sie je nach Schwenkstellung des Schwenkarmes unterschiedliche Drehwinkelstellungen bezüglich des Trägers 2 einnehmen. Um dies zu verhindern, ist die Abtriebswelle 22 wie erwähnt drehbeweglich am Schwenkarm 17 befestigt und über ein allgemein mit 27 bezeichnetes Getriebe an den Träger 2 gekoppelt. Dieses Getriebe bewirkt eine Relativ-Drehbewegung der Abtriebswelle 22 beim Verschwenken des Schwenkarmes 17 relativ zu diesem. Beim Ausführungsbeispiel ist die Ausgestaltung so getroffen, daß die Drehwinkelstellung der Abtriebswelle 22, die in Fig. 2 und 3 durch die strichpunktierte Linie 28 angedeutet ist, bezüglich einer rechtwinkelig zur Schwenkachse 26 verlaufenden Bezugsebene unabhängig von der jeweiligen Schwenkstellung des Schwenkarmes 17 konstant bleibt. Die in der Ausgangsstellung gemäß Fig. 2 vorliegende Drehwinkelstellung 28 bleibt also unabhängig von der jeweils eingenommenen verschwenkten Stellung unverändert. Dies ist von Vorteil, wenn man ein Werkstück entlang der gekrümmten Bahn 25 verlagern will, ohne seine Ausrichtung zu verändern.

Das Getriebe 27 umfaßt eine Zwischenwelle 32, die sich längs des Schwenkarmes 17 erstreckt und an diesem um ihre Längsachse verdrehbar gelagert ist. An beiden stirnseitigen Endbereichen weist die Zwischenwelle 32 jeweils einen Zahnkranz 33, 34 auf. Der dem trägernahen Ende zugeordnete Zahnkranz 34 steht in Verzahnungseingriff mit einem trägerfesten Zahnkranz 35, während der der Antriebswelle abgewandte Zahnkranz 33 mit einem abtriebsteilfesten Zahnkranz 36 kämmt. Dies alles hat zur Folge, daß beim Verschwenken des Schwenkarmes 17 in einer in Fig. 2 eingezeichneten Schwenkrichtung 37 die Abtriebswelle 22 eine entgegengesetzt gerichtete Gegendrehbewegung 38 ausführt. Damit sich die oben erläuterten Gegebenheiten einstellen, sind die einzelnen Verzahnung- bzw. Kämmeingriffe so ausgebildet, daß der Drehwinkel s₂ der Gegendrehbewegung 38 mit dem Schwenkwinkel s₁ der Schwenkbewegung 37 übereinstimmt (vgl. Fig. 3).

Beim konkreten Ausführungsbeispiel verfügt der Schwenkarm 17 über zwei in Längsrichtung beabstandete Lagereinheiten 42, 43. Die erste Lagereinheit 42 ist der Abtriebswelle 22 zugeordnet, die in ihr drehbeweglich gelagert ist. Bevorzugt durchsetzt die Abtriebswelle 22 die erste Lagereinheit 42 in Höhenrichtung, wobei ihre Befestigungspartie 23 an der dem Träger 2 abgewandten Unterseite hervorragt. Am entgegengesetzten oberen Endabschnitt der Abtriebswelle 22 kann ein Schlauchhalter 44 festgelegt sein, der zum Halten eines zu dem Sauggreifer 24 führenden Unterdruckschlauches dient. Da er stets die gleiche Bewegung wie der Sauggreifer 24 selbst ausführt, wird ein versehentliches Einklemmen des betreffenden Schlauches während der Schwenkbewegung verhindert.

Der abtriebswellenfeste Zahnkranz 36 kann wie abgebildet koaxial auf die Abtriebswelle 22 aufgesteckt sein, wobei durch ein Verdrehsicherungsmittel 45, beispielsweise einen quer durchgehenden Stift, die erforderliche Drehmitnahmeverbindung hergestellt wird. Entsprechendes gilt auch für die weiteren Zahnkränze.

Die Zwischenwelle 32 ist mit ihren beiden Endabschnitten in jeweils einer der beiden Lagereinheiten 42, 43 drehgelagert.

Der trägerfeste Zahnkranz 35 ist beim Ausführungsbeispiel unmittelbar an dem Träger 2 und dabei an dessen Tragpartie 5 starr festgelegt. Er umschließt die Antriebswelle 12 koaxial und ragt zweckmäßigerweise in eine Ausnehmung (49) der zugeordneten zweiten Lagereinheit 43 von oben her hinein. Die Befestigung an der Tragpartie 5 ist vorzugsweise als Preßsitzbefestigung ausgeführt, wobei er mit einem hohlzylindrischen Befestigungsabschnitt 46 in diejenige Durchbrechung 47 des Trägers 2 eingepreßt ist, durch die auch die Antriebswelle 12 hindurchverläuft. Zur Sicherung der Position kann noch ein sich an der Tragpartie 5 abstützendes, z. B. als Klemmschraube ausgebildetes Sicherungsmittel 48 vorgesehen sein.

Die verschiedenen Zahnkränze 33, 34, 35, 36 sind vorzugsweise von Zahnrädern gebildet, die insbesondere als Kegelzahnräder 52 ausgebildet sind. Dies erlaubt auf besonders einfache Weise eine Umlenkung des Kraftflußes um zweimal 90°.

Die drehfeste Verbindung zwischen dem Schwenkarm 17 und der Antriebswelle 12 erfolgt vorzugsweise unter Vermittlung der zweiten Lagereinheit 43. Diese hat beim Ausführungsbeispiel eine nach oben zur Tragpartie 5 hin offene Ausnehmung 51, in die die Antriebswelle 12 mit ihrem ersten Kupplungsabschnitt 13 unter drehfester Verbindung eingesteckt ist. Als geeignetes Verdrehsicherungsmittel 45' kommt beim Ausführungsbeispiel ein Keil zum Einsatz, der in jeweils einer Nut des ersten Kupplungsabschnittes 13 und der Ausnehmung 51 einsitzt. Zur axialen Lagefixierung trägt ein an der zweiten Lagereinheit 43 lösbar befestigtes Anschlagteil 53 bei, das einen Absatz 31 des trägerfesten Zahnkranzes 35 auf der dem Träger 2 zugewandten Seite hintergreift.

Ein besonderer Vorteil der beispielsgemäßen Schwenkeinrichtung 1 besteht darin, daß der Querabstand zwischen der Abtriebswelle 22 und der Antriebswelle 12, der den Schwenkradius r vorgibt, veränderlich einstellbar ist. Beim Ausführungsbeispiel erfolgt die Veränderung des Querabstandes durch das Verstellen der ersten Lagereinheit 42 relativ zu der unverschieblichen zweiten Lagereinheit 43.

Der Schwenkarm 17 besitzt ein im Querschnitt z. B. U-förmiges Halteteil 54, das eine der Tragpartie 5 zugewandte Ausnehmung 55 besitzt. Die beiden Lagereinheiten 42, 43 sind in diese Ausnehmung 55 eingesetzt. Die erste Lagereinheit 42 ist mit dem Halteteil 54 in Längsrichtung unverstellbar verbunden, was z. B. mittels aus Fig. 4 und 5 ersichtlicher Befestigungsschrauben 56 bewirkt wird. Die Verbindung zwischen dem Halteteil 54 und der zweiten Lagereinheit 43 geschieht hingegen über allgemein mit 57 bezeichnete Langloch-Justiermittel 57, die es gestatten, das Halteteil 54 zusammen mit der ersten Lagereinheit 42 in Richtung der Längsachse der Zwischenwelle 32 relativ zur zweiten Lagereinheit 43 zu verschieben. Die Langloch-Justiermittel 57 setzen sich aus mindestens einem sich in der gewünschten Verstellrichtung erstreckenden Langloch 58 und einer einem jeweiligen Langloch 58 zugeordneten Klemmschraube 59 zusammen. Eine jeweilige Klemmschraube 59 durchsetzt das zugeordnete Langloch 58, wobei sie in ein Gewinde 62 der ersten Lagereinheit 42 eingeschraubt ist und mit ihrem Kopf 63 die Umrandung des Langloches 58 beaufschlagt. Beim Ausführungsbeispiel sind an entgegengesetzten Längsseiten des Schwenkarmes 17 jeweils zwei Langloch-Justiermittel 57 vorgesehen.

In Fig. 4 ist eine Einstellung gezeigt, bei der der Schwenkradius der Abtriebswelle 22 den Minimalwert rₘᵢₙ einnimmt. Hier ist die erste Lagereinheit 42 weitest möglich in Richtung der zweiten Lagereinheit 43 verschoben. Löst man die vorhandenen Klemmschrauben 59 vorübergehend, läßt sich das Halteteil 54 mit der daran angeordneten Abtriebswelle 22 innerhalb des durch die Länge der Langlöcher 58 zur Verfügung gestellten Verstellbereiches beliebig weit von der Schwenkachse 26 entfernen. In Fig. 5 ist der beim Ausführungsbeispiel mögliche maximale Schwenkradius rₘₐₓ eingezeichnet.

Zur Gewährleistung der erläuterten Verstellbarkeit ist die Zwischenwelle 32 beim Ausführungsbeispiel nach Art einer Teleskopwelle ausgebildet, die über zwei Wellenteile 64, 65 verfügt, die ständig in drehfester Verbindung miteinander stehen und zugleich relativ zueinander verschiebbar sind. Jedes der beiden Wellenteile 64, 65 trägt den einen der beiden Zahnkränze 32, 34. Das eine Wellenteil 64 kann wie abgebildet einen Hohlwellenabschnitt 66 aufweisen, in den das andere Wellenteil 65 entsprechend der jeweils vorhandenen Axialposition mehr oder weniger weit eintaucht. Zur Gewährleistung der ständigen drehfesten Verbindung verfügen die beiden Wellenteile 64, 65 über ineinandergreifende Längenabschnitte 67, 68, die unkreisförmig und komplementär zueinander konturiert sind. Beim Ausführungsbeispiel ist eine quadratische Konturierung gewählt. Der am Hohlwellenabschnitt 66 vorgesehene Längenabschnitt 67 hat die Gestalt einer z. B. eingepreßten Hülse mit rechteckförmig konturierter Durchbrechung, während der am anderen Wellenteil 65 vorgesehene Längenabschnitt 68 als Vierkantstange ausgebildet ist. Denkbar wären aber auch andere Maßnahmen zur Verdrehsicherung bei gleichzeitiger Gewährleistung der axialen Verschiebbarkeit, beispielsweise die Verwendung von Keilprofilierungen.

Mit der beispielsgemäßen Schwenkeinrichtung ist es möglich, Gegenstände unter Verwendung eines mit einem Rotationsantrieb gekoppelten Schwenkarmes ohne winkelmäßige Lageveränderung des betreffenden Gegenstandes umzusetzen. Um die wahlweise Anbringung verschiedenartiger Drehantriebe zu ermöglichen, können Adapterplatten zwischengeschaltet sein, eine solche ist in Fig. 1 bei 69 angedeutet. An dem Träger 2 ist eine unabhängig vom jeweiligen Drehantrieb 6 separat gelagerte Antriebswelle 12 vorgesehen, an der der Schwenkarm 17 durch Klemmung befestigt sein kann. Durch das zwischengeschaltete Getriebe 27 läßt sich gewährleisten, daß die an der Abtriebswelle befestigten Elemente (z. B. Halter mit Längenausgleich und Saugnapf) in jeder Winkelstellung des Schwenkarmes die gleiche Position wie zu Beginn der Bewegung haben. Zur Feineinstellung des gewünschten Schwenkradius werden die vorhandenen Klemmschrauben 59 gelöst, so daß die Abtriebswelle 22 mit dem vorzugsweise als U-Profilelement gestalteten Halteteil 54 verstellbar ist. Die Momentenübertragung zwischen den einzelnen Zahnkranzpaarungen erfolgt über die ausziehbare bzw. teleskopierbare Zwischenwelle 32, wobei die Zahnkränze praktisch nur die Aufgabe haben, die Abtriebswelle 22 in der jeweils gewünschten Position zu halten. Die Ausrichtung der Schwenkeinrichtung 1 ist beliebig. Die zu befördernden Gegenstände 24 können von Fall zu Fall direkt oder unter Zwischenschaltung eines geeigneten Adapters an der Befestigungspartie 23 der Abtriebswelle 22 angebracht werden.

## Patentansprüche

1. Schwenkeinrichtung, mit einer bezüglich eines Trägers (2) drehbeweglichen und mittels eines Drehantriebes (6) zu einer Drehbewegung antreibbaren Antriebswelle (12), mit einem in Querrichtung von der Antriebswelle (12) abstehenden, zu einer Schwenkbewegung bezüglich des Trägers (2) antreibbaren Schwenkarm (17), an dem im Abstand zur Antriebswelle (12) eine parallelachsig zu dieser angeordnete Abtriebswelle (22) drehbeweglich gelagert ist, die mit einem zu verschwenkenden Gegenstand (24) verbindbar ist, und mit einer sich längs des Schwenkarmes (17) erstreckenden und an dem Schwenkarm (17) drehbar gelagerten Zwischenwelle (32), die einerseits mit einem dem Träger (2) zugeordneten Zahnkranz (35) und andererseits mit einem abtriebswellenfesten Zahnkranz (36) in Verzahnungseingriff steht, wobei die Abtriebswelle (22) beim angetriebenen Verschwenken des Schwenkarmes (17) eine bezüglich dessen Schwenkrichtung (37) gegensinnige Gegendrehbewegung (38) ausführen kann, dadurch gekennzeichnet, daß der Schwenkarm (17) drehfest an der Antriebswelle (12) angeordnet ist und über den auf die Antriebswelle (12) einwirkenden Drehantrieb (6) zu seiner Schwenkbewegung angetrieben wird, wobei der dem Träger (2) zugeordnete Zahnkranz (35) zur Erzeugung der Gegendrehbewegung der Abtriebswelle (22) als bezüglich dem Träger (2) unverdrehbar festgelegter Zahnkranz (35) ausgeführt ist.

2. Schwenkeinrichtung nach Anspruch 1, dadurch gekennzeichnet, daß die Verzahnungseingriffe derart ausgebildet sind, daß der Drehwinkel der Gegendrehbewegung (38) der Abtriebswelle (22) mit dem Schwenkwinkel der Schwenkbewegung (37) des Schwenkarmes (17) übereinstimmt.

3. Schwenkeinrichtung nach Anspruch 1 oder 2, dadurch gekennzeichnet, daß die Zwischenwelle (32) an ihren in Verzahnungseingriff stehenden Endbereichen jeweils einen mit dem zugeordneten trägerfesten bzw. abtriebswellenfesten Zahnkranz (35, 36) kämmenden Zahnkranz (33, 34) aufweist.

4. Schwenkeinrichtung nach einem der Ansprüche 1 bis 3, dadurch gekennzeichnet, daß der Querabstand zwischen der Abtriebswelle (22) und der Antriebswelle (12) zur Erzielung unterschiedlicher Schwenkradien (r) für die Abtriebswelle (22) verstellbar ist, wobei die Zwischenwelle (32) nach Art einer Teleskopwelle mit mindestens zwei in Axialrichtung relativ zueinander verschiebbaren und zugleich in ständiger drehfester Verbindung miteinander stehenden Wellenteilen (64, 65) ausgebildet ist.

5. Schwenkeinrichtung nach Anspruch 4, dadurch gekennzeichnet, daß die beiden Wellenteile (64, 65) mit unkreisförmige komplementäre Konturierungen aufweisenden Längenabschnitten (67, 68) längsverschieblich ineinandergreifen.

6. Schwenkeinrichtung nach Anspruch 5, dadurch gekennzeichnet, daß die ineinandergreifenden komplementären Längenabschnitte (67, 68) rechteckförmig und insbesondere quadratisch konturiert sind.

7. Schwenkeinrichtung nach einem der Ansprüche 1 bis 6, dadurch gekennzeichnet, daß der Schwenkarm (17) zwei in Längsrichtung der Zwischenwelle (32) beabstandete Lagereinheiten (42, 43) aufweist, wobei in der einen ersten Lagereinheit (42) die Abtriebswelle und der mit deren Zahnkranz (36) kämmende Wellenteil (65) und in der anderen zweiten Lagereinheit (43) der mit dem trägerfesten Zahnkranz (35) kämmende Wellenteil (64) gelagert ist.

8. Schwenkeinrichtung nach Anspruch 7, dadurch gekennzeichnet, daß der Schwenkarm (17) über die zweite Lagereinheit (43) an der bezüglich des trägerfesten Zahnkranzes (35) drehbaren Antriebswelle (12) festgelegt ist.

9. Schwenkeinrichtung nach Anspruch 7 oder 8, dadurch gekennzeichnet, daß die erste Lagereinheit (42) zur Veränderung des Schwenkradius der Abtriebswelle (22) in Längsrichtung der Zwischenwelle (32) relativ zu der zweiten Lagereinheit (43) verstellbar ist.

10. Schwenkeinrichtung nach Anspruch 9, dadurch gekennzeichnet, daß an der einen Lagereinheit (42) ein Halteteil (54) befestigt ist, das sich zu der anderen Lagereinheit (43) hin erstreckt und an dieser über Langloch-Justiermittel (57) verstellbar angeordnet ist.

11. Schwenkeinrichtung nach einem der Ansprüche 7 bis 10, dadurch gekennzeichnet, daß der trägerfeste Zahnkranz (35) in eine Ausnehmung (49) der zweiten Lagereinheit (43) hineinragt.

12. Schwenkeinrichtung nach einem der Ansprüche 1 bis 11, dadurch gekennzeichnet, daß der trägerfeste Zahnkranz (35) die Antriebswelle (12) koaxial umschließt.

13. Schwenkeinrichtung nach einem der Ansprüche 1 bis 12, dadurch gekennzeichnet, daß die Zahnkränze (33, 34, 35, 36) von Kegelzahnrädern (52) gebildet sind.

14. Schwenkeinrichtung nach einem der Ansprüche 1 bis 13, dadurch gekennzeichnet, daß die Antriebswelle (12) an dem Träger (2) drehgelagert ist und einen Kupplungsabschnitt (15) zur Verbindung mit der drehangetriebenen Betätigungswelle (7) des an dem Träger (2) anzuordnenden Drehantriebes (6), beispielsweise eines fluidisch angetriebenen Schwenkkolbenmotors, aufweist.

15. Schwenkeinrichtung nach einem der Ansprüche 1 bis 14, dadurch gekennzeichnet, daß an der Abtriebswelle (22) ein Schlauchhalter (44) für einen zu dem zu verschwenkenden Gegenstand (24) geführten Fluidschlauch vorgesehen ist.

## Claims

1. Swivel device with a drive shaft (12) capable of rotary movement relative to a support (2) and drivable to rotary movement by means of a rotary drive (6), with a swivel arm (17) drivable to a swivel movement relative to the support (2) and on which is mounted with rotary movement facility an output shaft (22) arranged parallel to and at a distance from the drive shaft (12), said output shaft (22) being capable of connection to an object (24) to be swivelled, and with an intermediate shaft (32) extending along and pivotably mounted on the swivel arm (17) and meshing at one end with a gear rim (35) assigned to the support (2) and at the other end with a gear rim (36) fixed to the output shaft, wherein the output shaft (22) can execute a counter-rotation movement (38) in an opposite direction to its direction of swivel (37) when the swivel arm (17) is driven to swivelling movement, characterized in that the swivel arm (17) is mounted non-rotatably on the drive shaft (12) and is driven to perform a swivel movement through the rotary drive (6) acting on the output shaft (22), wherein the gear rim (35) assigned to the support (2) is designed as a gear rim (35) fixed non-rotatably relative to the support (2) in order to generate the counter-rotation movement of the output shaft (22).

2. Swivel device according to claim 1, characterized in that the gear meshing is so designed that the rotation angle of the counter-rotation movement (38) of the output shaft (22) coincides with the swivel angle of the swivel movement (37) of the swivel arm (17).

3. Swivel device according to claim 1 or 2, characterized in that the intermediate shaft (32) has, at each of its end sections which are in gear engagement, a gear rim (33, 34) meshing with the assigned gear rim (35, 36) fixed to the support and to the output shaft respectively.

4. Swivel device according to any of claims 1 to 3, characterized in that the transverse clearance between the output shaft (22) and the drive shaft (12) is adjustable in order to obtain different swivel radii (r), with the intermediate shaft (32) being in the form of a telescopic shaft with at least two shaft sections (64, 65) capable of sliding axially relative to one another and at the same time permanently non-rotatably connected to one another.

5. Swivel device according to claim 4, characterized in that the two shaft sections (64, 65) engage in one another with longitudinal movement facility, with length sections (67, 68) which have non-circular, complementary contours.

6. Swivel device according to claim 5, characterized in that the complementary length sections (67, 68) which engage in one another are rectangular and in particular square in contour.

7. Swivel device according to any of claims 1 to 6, characterized in that the swivel arm (17) has two bearing units (42, 43), spaced apart along the axis of the intermediate shaft (32), with the output shaft and the shaft section (65) engaging with its gear rim (36) being mounted in the first bearing unit (42), and the shaft section (64) engaging with the gear rim (35) fixed to the support being mounted in the second bearing unit (43).

8. Swivel device according to claim 7, characterized in that the swivel arm (17) is fastened to the drive shaft (12), rotatable relative to the gear rim (35) fixed to the support, via the second bearing unit (43).

9. Swivel device according to claim 7 or 8, characterized in that the first bearing unit (42) is adjustable relative to the second bearing unit (43), in order to vary the swivel radius of the output shaft (22) in the longitudinal direction of the intermediate shaft (32).

10. Swivel device according to claim 9, characterized in that a retaining element (54) fixed to one bearing unit (42) extends to the other bearing unit (43) and is located adjustably on the latter via oblong-hole means of adjustment (57).

11. Swivel device according to any of claims 7 to 10, characterized in that the gear rim (35) fixed to the support extends into a recess (49) of the second bearing unit (43).

12. Swivel device according to any of claims 1 to 11, characterized in that the gear rim (35) fixed to the support coaxially encompasses the drive shaft (12).

13. Swivel device according to any of claims 1 to 12, characterized in that the gear rims (33, 34, 35, 36) are formed by bevel gears (52).

14. Swivel device according to any of claims 1 to 13, characterized in that the drive shaft (12) is pivotably mounted on the support (2) and has a coupling section (15) for connection to the rotary-driven operating shaft (7) of the rotary drive (6) to be mounted on the support (2), for example a fluid-operated rotary piston motor.

15. Swivel device according to any of claims 1 to 14, characterized in that the output shaft (22) is provided with a hose mounting (44) for a fluid hose to be guided to the object (24) to be swivelled.

## Revendications

1. Dispositif de pivotement, avec un arbre moteur (12) mobile en rotation par rapport à un support (2) et pouvant être entraîné en un mouvement de rotation au moyen d'un mécanisme d'entraînement en rotation (6), avec un bras pivotant (17) dépassant dans la direction transversale de l'arbre moteur (12), pouvant être entraîné en un mouvement de pivotement par rapport au support (2), bras sur lequel est monté, mobile en rotation, à distance de l'arbre moteur (12), un arbre de sortie (22) placé parallèlement à l'axe de celui-ci, lequel arbre de sortie peut être relié à un objet (24) à faire pivoter, et avec un arbre intermédiaire (32), s'étendant le long du bras pivotant (17) et monté tournant sur le bras pivotant (17), lequel arbre intermédiaire est en engrènement d'une part avec une couronne dentée (35) associée au support (2) et d'autre part avec une couronne dentée (36) solidaire de l'arbre de sortie, l'arbre de sortie (22) pouvant exécuter un contre-mouvement de rotation (38) en sens contraire au sens de pivotement (37) du bras pivotant (17), lorsque ce dernier est entraîné en pivotement, caractérisé en ce que le bras pivotant (17) est monté solidairement en rotation sur l'arbre moteur (12) et est entraîné dans son mouvement de pivotement, par le mécanisme d'entraînement en rotation (6), agissant sur l'arbre moteur (12), la couronne dentée (35), associée au support (2), étant réalisée en tant que couronne dentée (35) fixée de manière à ne pouvoir tourner par rapport au support (2), pour produire le contre-mouvement de rotation de l'arbre de sortie (22).

2. Dispositif de pivotement selon la revendication 1, caractérisé en ce que les engrènements sont conçus de manière que l'angle de rotation du contre-mouvement de rotation (38) de l'arbre de sortie (22) coïncide avec l'angle de pivotement du mouvement de pivotement (37) du bras pivotant (17).

3. Dispositif de pivotement selon la revendication 1 ou 2, caractérisé en ce que l'arbre intermédiaire (32) présente, dans chacune de ses zones d'extrémité en engrènement, une couronne dentée (33, 34) engrenant avec la couronne dentée (35, 36) associée, solidaire du support ou solidaire de l'arbre de sortie.

4. Dispositif de pivotement selon l'une des revendications 1 à 3, caractérisé en ce que la distance transversale entre l'arbre de sortie (22) et l'arbre moteur (12) est réglable pour obtenir des rayons de pivotement (r) différents pour l'arbre de sortie (22), l'arbre intermédiaire (32) étant réalisé à la manière d'un arbre télescopique avec au moins deux parties d'arbre (64, 65), pouvant coulisser axialement l'une par rapport à l'autre et étant en même temps liées en rotation de façon permanente entre elles.

5. Dispositif de pivotement selon la revendication 4, caractérisé en ce que les deux parties d'arbre (64, 65) s'engagent l'une dans l'autre, par coulissement longitudinal, avec des tronçons longitudinaux (67, 68) présentant des contours non circulaires, complémentaires.

6. Dispositif de pivotement selon la revendication 5, caractérisé en ce que les tronçons longitudinaux (67, 68) complémentaires, s'engageant les uns dans les autres, ont un contour de forme rectangulaire et en particulier carré.

7. Dispositif de pivotement selon l'une des revendications 1 à 6, caractérisé en ce que le bras pivotant (17) comporte deux unités de palier (42, 43), espacées dans la direction longitudinale de l'arbre intermédiaire (32), dans une première unité de palier (42) étant montés l'arbre de sortie et la partie d'arbre (65), engrenant avec la couronne dentée (36) et dans l'autre deuxième unité de palier (43) étant montée la partie d'arbre (64) engrenant avec la couronne dentée (35) solidaire du support.

8. Dispositif de pivotement selon la revendication 7, caractérisé en ce que le bras pivotant (17) est fixé par l'intermédiaire de la deuxième unité de palier (43), sur l'arbre moteur (12), tournant par rapport à la couronne dentée (35) solidaire du support.

9. Dispositif de pivotement selon la revendication 7 ou 8, caractérisé en ce que la première unité de palier (42) est réglable dans la direction longitudinale de l'arbre intermédiaire (32), par rapport à la deuxième unité de palier (43), pour faire varier le rayon de pivotement de l'arbre de sortie (22).

10. Dispositif de pivotement selon la revendication 9, caractérisé en ce que sur une unité de palier (42) est fixé un élément de maintien (54), qui s'étend vers l'autre unité de palier (43) et qui est monté réglable sur celle-ci, par des moyens d'ajustage à trou oblong (57).

11. Dispositif de pivotement selon l'une des revendications 7 à 10, caractérisé en ce que la couronne dentée (35) solidaire du support pénètre à l'intérieur d'un évidement (49) de la deuxième unité de palier (43).

12. Dispositif de pivotement selon l'une des revendications 1 à 11, caractérisé en ce que la couronne dentée (35) solidaire du support entoure coaxialement l'arbre moteur (12).

13. Dispositif de pivotement selon l'une des revendications 1 à 12, caractérisé en ce que les couronnes dentées (33, 34, 35, 36) sont formées par des roues dentées coniques (52).

14. Dispositif de pivotement selon l'une des revendications 1 à 13, caractérisé en ce que l'arbre moteur (12) est monté tournant sur le support (2) et comporte un tronçon d'accouplement (15) pour sa liaison avec l'arbre d'actionnement (7), entraîné en rotation, du mécanisme d'entraînement en rotation (6), à monter sur le support (2), par exemple d'un moteur à piston pivotant, entraîné par un fluide.

15. Dispositif de pivotement selon l'une des revendications 1 à 14, caractérisé en ce que l'arbre de sortie (22) est prévu un porte-tuyau pour un tuyau de fluide, guidé vers l'objet (24) à faire pivoter.
